**Europäisches Patentamt**

**European Patent Office**

**Office européen des brevets**

(19)

(11) Numéro de publication: **0 014 663**
**A1**

(12)

# DEMANDE DE BREVET EUROPEEN

(21) Numéro de dépôt: **80400195.6**

(22) Date de dépôt: **07.02.80**

(51) Int. Cl.³: **A 01 G 9/24**
**F 24 J 3/02, G 05 D 23/01**

(30) Priorité: **07.02.79 FR 7903130**

(43) Date de publication de la demande:
**20.08.80 Bulletin 80/17**

(84) Etats Contractants Désignés:
**AT BE CH DE FR GB IT LU NL SE**

(71) Demandeur: **Toupin, Joseph François**
**28 Rue du Pré**
**F-72300 Sablé(FR)**

(72) Inventeur: **Toupin, Joseph François**
**28 Rue du Pré**
**F-72300 Sablé(FR)**

(74) Mandataire: **Harlé, Robert et al,**
**c/o Cabinet Harlé & Lechopiez 21, rue de la**
**Rochefoucauld**
**F-75009 Paris(FR)**

(54) Procédé et dispositif de régulation du flux de rayonnement qui traverse une paroi transparente, et application dudit procédé.

(57) On fait circuler un fluide formé d'un liquide transparent chargé d'un agent opacifiant, par exemple un gaz formant une émulsion avec le liquide, dans un circuit comportant un passage (16) entre deux surfaces transparentes placées pour constituer ladite paroi transparente, et on agit sur la quantité ou la forme (taille des bulles de l'émulsion) de l'agent opacifiant pour régler le pouvoir absorbant ou réfléchissant du fluide envoyé entre lesdites surfaces transparentes et par conséquent la quantité d'énergie absorbée ou réfléchie.
Application aux serres.

EP 0 014 663 A1

FIG.4

Procédé et dispositif de régulation du flux

de rayonnement qui traverse une paroi

transparente, et application dudit procédé

La présente invention concerne un procédé et un dispositif de régulation du flux de rayonnement, lumière solaire par exemple, qui traverse une paroi transparente, et de récupération de l'énergie interceptée au cours de ladite régulation.

Les serres utilisées jusqu'à présent sont habituellement de deux types : on connaît d'une part les enveloppes en matière synthétique telles qu'en poly - chlorure de vinyle (PVC), en polyéthylène, maintenues par des arceaux à usage intensif, notamment chez les maraîchers, et d'autre part les serres à verrière utilisées plus particulièrement en horticulture. Ces dernières serres comportent, en général, des moyens internes de chauffage, habituellement un chauffage central et d'humidification, afin de maintenir une température et une hygrométrie bien déterminées selon les espèces cultivées.

Au moyen des enveloppes en matière synthétique, il n'est pas possible de réguler la température

DA.

à l'intérieur de l'enceinte;en effet,leur rôle se limite à la protection contre le froid,de préférence vis-à-vis des premières gelées et, lors de l'exposition aux rayonnements solaires,lesdites enveloppes sont découvertes puis installées à nouveau en fonction de la baisse d'exposition. Il s'agit là de moyens assez peu élaborés,prenant du temps,nécessitant de nombreuses manipulations et finalement peu pratiques.

Les serres du type verrière à chauffage central incorporé sont munies de moyens indicateurs de la température et du pourcentage d'humidité à l'intérieur de l'enceinte;ainsi,un système à thermostat régule la température pendant les heures d'éclairement et d'exposition du soleil ayant pour effet de baisser la consommation d'énergie pendant lesdites heures.

Cependant,il existe un problème avec ce type de serres à verrière:pendant les heures chaudes d'une journée où l'intensité lumineuse réfléchie sur la serre peut provoquer des phénomènes de surchauffe ou de sur-exposition ne convenant pas aux espèces cultivées.

Pour remédier à ce problème,on a utilisé divers moyens tels que des bâches de couverture,des volets tant internes qu'externes,mais ces moyens,outre qu'ils ne permettent pas de récupérer l'énergie solaire, ne procurent pas, de plus,un réglage précis et satisfaisant de la régulation de la température à l'intérieur de l'enceinte .

On a également proposé , par exemple dans le brevet US 3 107 052 de prévoir une serre dont la paroi transparente est creuse,et de faire circuler un liquide capable d'absorber une partie du rayonnement dans l'épaisseur de la paroi. Ce liquide s'échauffe sous l'effet du rayonnement et la chaleur qu'il a reçue peut être soit stockée soit dissipée selon les besoins,de façon à maintenir la température du liquide dans des limites choisies à l'avance. On peut utiliser selon les besoins des liquides qui diffèrent entre eux par leurs propriétés d'absorbtion ou par leur couleur,ou encore y introduire des bulles de gaz,des paillettes métalliques, des particules colorées à des fins ornementales. Un tel système permet difficilement une adaptation à des variations rapides des conditions de rayonnement;en effet les propriétés absorbantes ou réfléchissantes d'un liquide dépendent peu de la température,si bien qu'une brusque variation de l'ensoleillement,par exemple, ne sera compensée qu'après un temps assez considérable, en raison de l'inertie des moyens de stockage d'énergie. Ainsi,un appareil du genre de celui de ce brevet constitue un récupérateur d'énergie plutôt qu'un appareil de régulation de flux de rayonnement.

On peut faire la même remarque à propos d'autres dispositifs analogues,par exemple ceux des demandes de brevet FR 2.271 763, FR 2.344.217 et DE 2 608 302.

La présente invention trouve une application à la fois pendant les heures à faible ensoleillement et à ensoleillement intense;elle présente en outre l'avantage de pouvoir être mise en oeuvre en liaison avec les installations déjà existantes avec peu ou pas de modifications.

L'idée de base de la présente invention est d'obtenir un réglage des variations du flux photonique émis par le soleil et, par conséquent, de la densité de la lumière admise dans une enceinte telle qu'une serre d'une façon simple et efficace avec un prix de revient relativement bas, réglage qui n'a pu être obtenu jusqu'à présent par les moyens de la technique antérieure.

Il est connu que certaines alternances et dégradés éclairement-obscurité sont absolument nécessaires à la modification, par exemple, de périodes de floraison.

La présente invention propose un procédé simple, facile à mettre en oeuvre, supprimant les divers inconvénients précités, trouvant une application particulière, notamment pour la climatisation de serres au moyen d'un dispositif à circuit fermé d'une conception très rationnelle et très appropriée.

Le procédé de l'invention repose sur un principe simple et fonctionnel permettant de régler à faible coût la température d'une enceinte chauffée par énergie solaire en augmentant ou en réduisant le taux d'absorption du flux photonique, en contrôlant ainsi l'énergie lumineuse introduite dans une enceinte telle qu'une serre, et de récupérer ladite énergie.

Ainsi, la présente invention fournit un procédé de régulation du flux de rayonnement, lumière solaire par exemple, qui traverse une paroi transparente, et de récupération de l'énergie interceptée au cours de ladite régulation , procédé dans lequel on fait circuler un fluide dans un circuit comportant un passage entre des surfaces transparentes,par exemple des tubes transparents,ou un espace entre deux parois transparentes,placés pour constituer ladite paroi traversée par le rayonnement,et dans lequel on fait circuler comme fluide caloporteur un liquide transparent chargé d'un agent opacifiant,on agit sur la quantité d'agent opacifiant introduite dans le liquide pour régler le pouvoir absorbant du liquide envoyé dans lesdits tubes transparents ou entre lesdites lames transparentes et, par conséquent,la quantité d'énergie absorbée ou réfléchie.

De préférence,on sépare le liquide transparent et l'agent opacifiant après qu'ils sont passés dans lesdits tubes ou entre lesdites lames,et on recycle l'un et/ou l'autre de ces produits,dans des proportions correspondant au pouvoir absorbant ou réfléchissant désiré pour le fluide.

Le produit opacifiant peut former avec le liquide transparent une émulsion à fort pouvoir réfléchissant.

Suivant la modalité préférée,l'agent opacifiant est un gaz,on forme une émulsion de ce gaz dans le liquide transparent,et on change les proportions relatives de gaz du liquide,et/ou la taille des bulles dans l'émulsion afin de faire varier le pouvoir absorbant et/ou réfléchissant du fluide.

Suivant une autre modalité intéressante,le liquide transparent est de l'eau et le produit opacifiant est un liquide non miscible à l'eau et à pouvoir absorbant élevé tel qu'une huile minérale,une huile végétale ou du kérosène teintés.

Suivant une autre modalité,le produit opacifiant est constitué par de fines particules solides, telles que des microbilles de polypropylène,de 1 à 400 microns.

Dans ces deux cas,on peut prévoir que le liquide transparent est lui-même chargé d'un produit coloré ou non pour augmenter au maximum son coefficient d'absorption.

Avantageusement,on récupère l'énergie absorbée par ledit fluide lors de son passage dans lesdits tubes transparents ou entre lesdites lames transparentes.

Divers avantages et caractéristiques de la présente invention ressortiront de la description détaillée ci-après.

L'invention est décrite plus en détail à l'aide d'exemples non limitatifs,illustrés par les dessins annexés,parmi lesquels:

Fig.1 est un schéma synoptique d'un dispositif pour la mise en oeuvre du procédé selon la présente invention;

Fig.2 illustre une variante de réalisation de l'ensemble des réservoirs et moyens connexes de ce dispositif;

—    Fig.3 illustre schématiquement une autre variante de réalisation d'une partie de ce dispositif,

Fig.4 est un schéma synoptique d'un autre dispositif pour la mise en oeuvre du procédé selon l'invention.

Le dispositif pour la mise en oeuvre du procédé selon la présente invention permettant la modulation du rayonnement lumineux et de l'énergie captée se compose de deux cuves ou réservoirs; la cuve 1 sert à entreposer un fluide transparent, en particulier de l'eau, tandis que la cuve 2 est remplie d'un produit opacifiant qui sera décrit de façon plus détaillée ci-après. Il est possible de prévoir une cuve à deux compartiments, l'un pour le fluide transparent et l'autre pour le produit opacifiant, à condition de disposer d'un séparateur 3 approprié ne permettant aucun mélange entre les deux produits. Les deux réservoirs 1 et 2 comprennent chacun une sortie de produit désignée respectivement par 4 pour le fluide transparent et par 5 pour le produit opacifiant.

Le liquide transparent quittant la sortie 4 est acheminé par la conduite 6 vers une pompe 8. Le produit opacifiant est dirigé à partir de la sortie 5, par l'intermédiaire d'une conduite 7, vers un dispositif de dosage ou doseur 9 réglant la quantité désirée en fonction des besoins, comme déterminé par une cellule photorésistante 10 située à l'extérieur du dispositif et reliée par tout moyen convenable 11 (illustré de façon très schématique) au doseur 9. Le rôle et le fonctionnement de ladite cellule seront décrits plus loin de façon plus détaillée. Après le dosage convenable déterminé par la cellule précitée, le produit opacifiant, par l'intermédiaire de la conduite 12, rejoint à la jonction 13, dans la conduite 14, le fluide transparent non miscible, et la suspension formée à concentration déterminée par la cellule photorésistante 10 est dirigée par ladite conduite 14,par l'intermédiaire de la conduite 15,en direction du capteur solaire 16 .

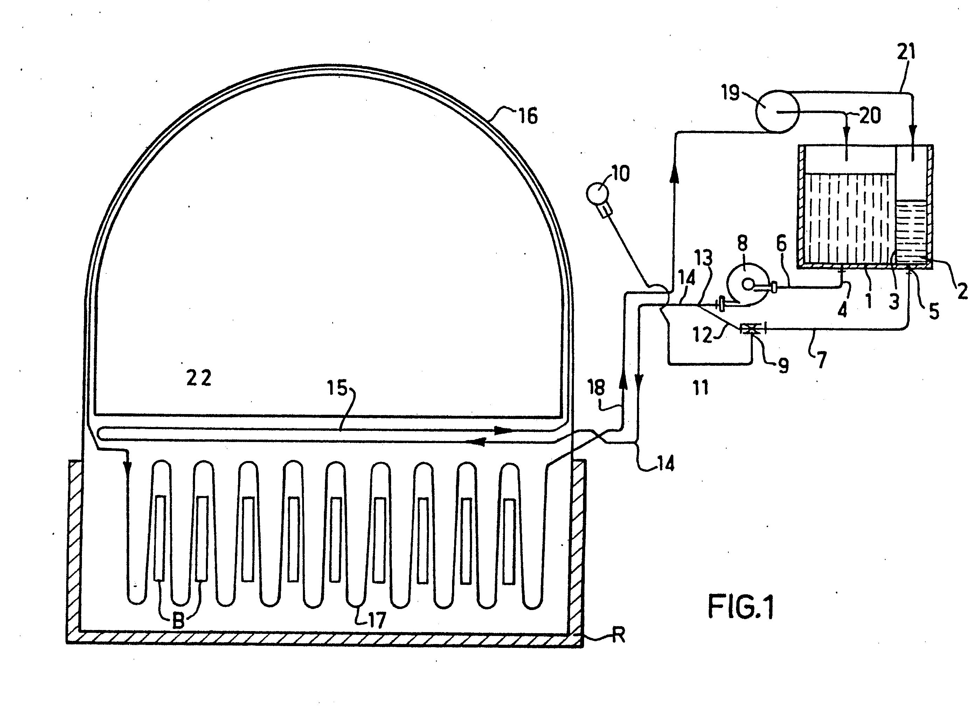

Le fluide transparent,qui est un fluide caloporteur avec une quantité variable d'agent opacifiant non miscible,peut alors,à la sortie de la conduite 15,se déplacer sur le pourtour du capteur solaire 16 où il a un effet de modulation du rayonnement,il absorbe une certaine quantité de chaleur et pénètre ensuite dans le circuit 17 dans lequel il peut transférer l'énergie absorbée,par exemple,à des briques d'accumulation de chaleur symbolisées par la référence B à la figure 1 ou tout autre moyen convenable.

Le fluide transparent,avec une quantité variable prédéterminée d'agent opacifiant,débarassé de l'énergie qu'il a absorbée,retourne alors,au moyen de la conduite 18,en direction d'un séparateur 19 constitué,par exemple,par un simple dispositif de filtration,(dans une autre réalisation,le séparateur est constitué par une paroi filtrante placée entre les réservoirs 1 et 2).

Ce dispositif de filtration permet de séparer aisément l'émulsion fluide transparent-agent opacifiant et chaque constituant élémentaire est réintroduit par les conduites respectives 20 et 21 dans les réservoirs correspondants 1 et 2.

Il convient de remarquer que le dispositif pour la mise en oeuvre du procédé selon la présente invention fonctionne en continu,en circuit fermé autono-

0014663

me,et que ledit fonctionnement est basé sur les informations recueillies par la cellule photorésistante 10 placée à l'extérieur de l'enceinte 22 telle qu'une serre.

Cette cellule 10 présente comme caractéristique d'être pourvue d'une plaque de réglage permettant de déterminer la fonction du doseur 9 dont le rôle est d'admettre dans le circuit du fluide caloporteur une quantité variable d'agent opacifiant non miscible;ainsi, l'augmentation de l'intensité lumineuse modifie la fonction ou position du doseur qui admet un débit d'agent opacifiant plus important.

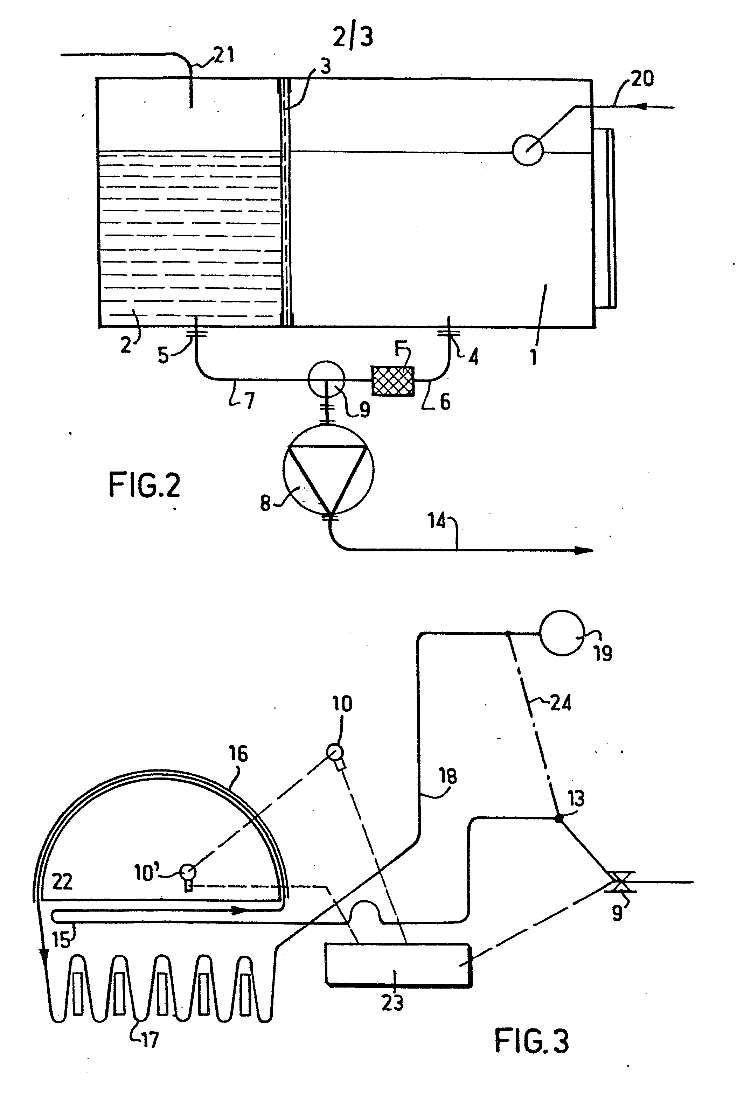

La figure 2 représente,à plus grande échelle ,l'ensemble à cuves ou réservoirs selon une variante de montage. Dans cette figure , 1 désigne le réservoir de fluide transparent,2 le réservoir avec produit opacifiant et 3 l'ensemble séparateur. De la même façon que dans le mode de réalisation selon la figure 1, les deux produits (fluide transparent-agent opacifiant)quittent les cuves ou réservoirs 1 et 2 par les sorties respectives 4,5 pour être introduits dans les conduites 6,7; toutefois,dans ce cas,on prévoit en amont du dispositif de dosage 9 un filtre F dont le rôle est de débarrasser supplémentairement,si besoin est, le fluide transparent des dernières traces de produit opacifiant avant son passage à travers le dispositif doseur 9.

A ce stade de la description,il est à noter qu'en fonction des indications procurées par la cellule photorésistante,il est possible de faire circuler l'un ou l'autre produit ou tout mélange approprié desdits produits, des moyens annexes convenables non représentés permettant n'importe quel dosage désiré.

Les produits provenant des conduites 6 et 7 dosés selon le rapport approprié dans le dispositif 9 sont alors envoyés ,par l'intermédiaire de la pompe 8, dans la conduite 14,en vue de rejoindre le circuit 15 puis d'effectuer le cycle décrit en regard de la description mentionnée pour la figure 1. Les produits sont réintroduits en fin de circuit dans leurs réservoirs respectifs 1 et 2 par les conduites 20 et 21.

Le fluide transparent peut être tout fluide caloporteur approprié;cependant,dans l'utilisation décrite ici,on préfère,pour des raisons de coût,utiliser de l'eau qui est, en général,d'un prix de revient moindre.

Le produit opacifiant peut être liquide ou solide. Dans le cas d'un produit liquide,il peut être choisi parmi le groupe comprenant le kérosène,une huile minérale ou une huile végétale;cependant,il peut également être solide et se présenter sous la forme de fines particules. A titre d'exemple,il peut s'agir de microbilles de polypropylène ou analogue d'un diamètre compris dans la gamme de 250 à 400 microns.

Le capteur solaire 16 est réalisé,de préférence,à partir de profilés auto-porteurs multitubulaires en matière plastique,profilés qui sont transparents et parfaitement perméables aux rayonnements solaires et qui permettent une bonne circulation du fluide caloporteur chargé ou non de produit opacifiant. Le fluide peut aussi circuler entre deux surfaces transparentes parallèles constituant un tube aplati.

Dans le circuit 17, le fluide caloporteur cède l'énergie qu'il a absorbée à tout moyen d'accumulation de chaleur, par exemple des briques B illustrées schématiquement; le circuit 17 de récupération d'énergie peut être convenablement protégé par un quelconque revêtement R, figuré par des hachures à la figure 1, de n'importe quel genre approprié.

Le procédé selon la présente invention et les dispositifs qu'on vient de décrire permettent de doser à volonté l'énergie lumineuse pénétrant dans une enceinte, par exemple une serre, et dans ce cas d'orienter dans une gamme parfaitement adaptée les phénomènes de photo-synthèse.

Ils peuvent également être utilisés pour limiter et/ou réguler l'énergie lumineuse entrant dans une enceinte où se trouvent des objets qui supportent mal une chaleur ou un éclairement excessifs, comme certains produits alimentaires. Ils peuvent également servir à la climatisation de locaux ou ateliers.

Dans les utilisations qu'on vient d'énumérer en dernier, l'appareil fonctionne essentiellement comme un écran d'opacité réglable, et la récupération d'énergie solaire n'est qu'un aspect secondaire qu'on peut même parfois négliger, le circuit 17 étant alors conçu comme un simple réfrigérant destiné à éviter un échauffement exagéré du liquide.

A la figure 3,on a représenté schématiquement une variante de réalisation d'une partie du dispositif selon l'invention,variante dans laquelle on prévoit,à l'intérieur de l'enceinte 22,une autre cellule 10' analogue à la cellule 10 placée à l'extérieur et qui est reliée à un ensemble de calcul 23,ledit ensemble 23,également en liaison avec la cellule 10,pouvant agir selon les informations reçues à partir de l'une ou l'autre cellule ou des deux sur le dispositif de dosage 9 afin de réguler la circulation du fluide dans le dispositif. Les deux cellules 10 et 10' peuvent également être reliées par tout moyen convenable. Ces moyens sont symbolisés à la figure 3 par des lignes pointillées.

24 désigne une dérivation pour le fluide qui peut être utiliséelorsqu'il n'est pas nécessaire que ledit fluide retourne dans les réservoirs,par exemple lorsqu'il n'y a pas de modifications des conditions climatiques et lorsqu'on désire une circulation du fluide ayant la même concentration en produit.

Le fonctionnement du dispositif de la présente invention permet d'éliminer au maximum l'inertie et de suivre,avec un déphasage aussi faible que possible,les variations du flux photonique émis par le soleil et, par conséquent,la densité de lumière admise dans l'enceinte.

On peut envisager,comme indiqué plus haut, que l'agent de modération et de régulation du flux photonique soit uniquement opacifiant et, dans ce cas,sa proportion dans le circuit crée un écran plus ou moins important et infiniment réglable.

Il est également possible d'adopter un agent opacifiant ayant des caractéristiques sélectives n'admettant à l'intérieur de l'enceinte (serre par exemple)que certaines longueurs d'onde du spectre solaire.

D'une manière générale,le dispositif selon l'invention,outre le fait que son fonctionnement peut être combiné dans le cas d'une serre avec le dosage du gaz carbonique et le pourcentage d'humidité,permet, d'une façon satisfaisante,de régler le flux lumineux reçu ,de capter de l'énergie et de la restituer par la suite.

L'invention n'est pas limitée au mode de réalisation représenté et décrit en détail,car diverses modifications peuvent y être apportées sans sortir de son cadre. Elle peut notamment être utilisée dans le cas de rayonnements autres que celui du soleil,par exemple pour la protection contre les rayonnements provenant d'un four,de flammes,d'un arc électrique, etc.....

Une application différente du procédé de l'invention consiste non pas à absorber le rayonnement solaire pour s'en protéger ou pour l'utiliser à des fins de chauffage ,mais à limiter la consommation d'énergie utilisée pour l'éclairage, et éventuellement le chauffage des locaux. On sait que les bâtiments modernes comportent souvent de très grandes surfaces vitrées,qui,la nuit,sont autant de sources de déperdition d'énergie. Le simple remplacement des surfaces transparentes par des surfaces à haut pouvoir réflecteur permettrait d'économiser 20% et plus de l'énergie consacrée à l'éclairage et au chauffage;or, la présente invention permet de réaliser cette transformation à l'heure voulue,et pour le temps voulu,avec un prix réduit. Il suffit d'utiliser un produit opacifiant conférant au fluide un fort pouvoir réflecteur. Ceci peut être obtenu,par exemple,avec des particules métalliques ou en formant une émulsion avec un gaz ou avec un liquide non miscible. Les surfaces vitrées deviennent ainsi,la nuit,des surfaces à grande réflectance.

On peut ainsi maintenir,dans un atelier, un éclairement maintenu jour et nuit dans une plage de valeurs optimales,en introduisant,le jour,un agent opacifiant de couleur sombre,absorbant le rayonnement solaire lorsque celui-ci est excessif,et en récupérant l'énergie absorbée, et, la nuit,un agent opacifiant conférant au fluide un fort pouvoir réflecteur,de façon à conserver à l'intérieur du bâtiment l'énergie lumineuse et l'énergie thermique dont au moins une partie provient de la récupération diurne de l'énergie solaire.

On notera que dans l'exemple d'application décrit plus haut,on recycle à la fois le liquide et le produit opacifiant. Si l'un et /ou l'autre de ces produits sont bon marché et peuvent être ensuite rejetés ou récupérés,les installations en seront facilement simplifiées. Ce sera le cas par exemple d'une émulsion gaz-eau comme celle dont on vient de parler. Ce peut être aussi le cas par exemple si on emploie comme

∩∩14663

produits opacifiants des produits colorés, comme des combustibles liquides, des huiles résiduaires etc....qui sont ensuite brûlés ou traités d'une autre façon, après séparation si cela est nécessaire.

Dans le cas où le recyclage des produits n'est pas nécessaire, le dispositif ne comporte, outre les tubes ou lames transparentes, que les canalisations de sortie et le dispositif de dosage avec le capteur de flux lumineux qui le commande. Une pompe n'est nécessaire que si l'alimentation ne peut se faire par gravité ou par thermosiphon.

Pour réaliser les tubes ou lames transparents, on peut utiliser des profilés multitubulaires en matière plastique transparente, qu'on peut fabriquer par extrusion en largeur atteignant 2 m et plus, pour un prix peu élevé.

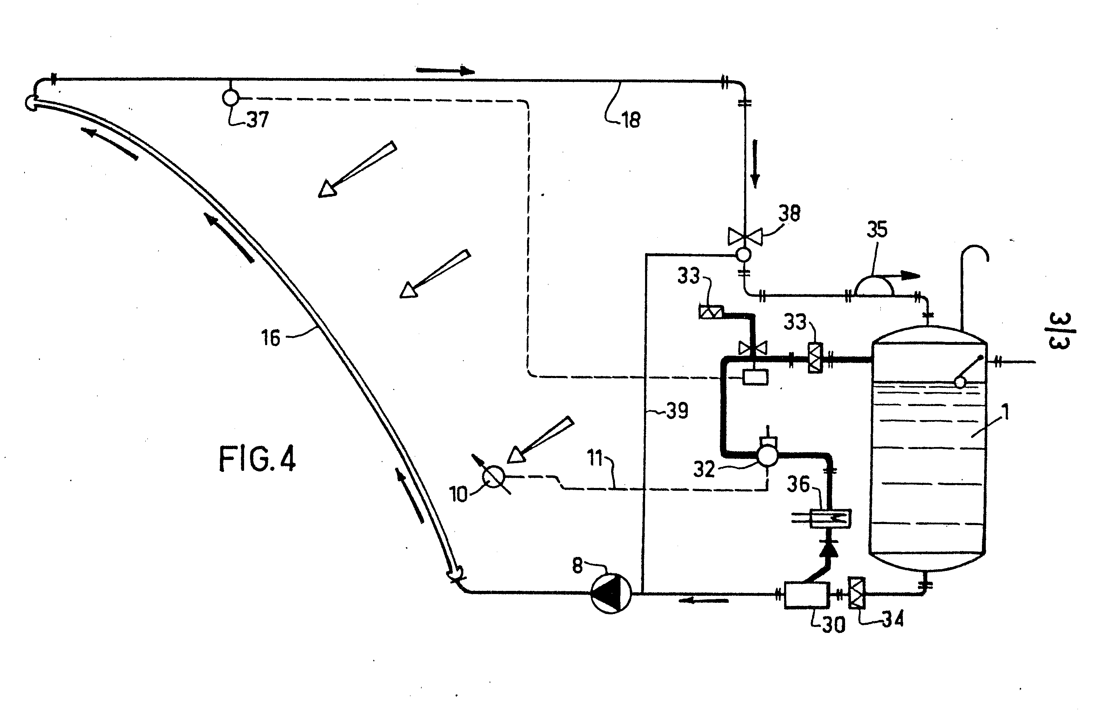

La figure 4 décrit un autre dispositif pour la mise en oeuvre du procédé selon la modalité préférée de l'invention, et dans laquelle le fluide caloporteur est une émulsion d'air dans l'eau. Sur cette figure, les mêmes organes que dans les figures 1 à 3 portent les mêmes repères

Le dispositif comprend un circuit fermé de circulation de fluide avec une cuve à eau fermée 1, une pompe de circulation 8, une surface transparente à double paroi 16 et une conduite de retour 18. Sur le trajet allant de la cuve 1 à la surface transparente 16 est placé un émulseur 30 constitué d'un tube cylindrique parcouru par l'eau, à l'intérieur duquel est placé un bicône coaxial au tube et formant venturi, dans

16

l'axe duquel débouche,une conduite 31 amenant de l'air comprimé. Le venturi est prolongé par une pièce convergente en métal fritté poreux. L'air comprimé provient soit de l'extérieur soit de la partie supérieure de la cuve 1 et est envoyé dans l'injecteur par une pompe 32, à débit variable,commandée par un capteur photo-électrique 10. Des filtres 33 assurent une alimentation en air dépoussiéré dépourvu de particules abrasives,et le liquide traverse lui aussi un filtre 34,ce qui assure une grande longévité à l'installation et en particulier aux surfaces transparentes même si elles sont en matière plastique.

Sur la conduite de retour 18 est intercalé un casseur d'émulsion à chicanes 35. En outre,il est prévu des moyens pour envoyer dans le circuit,à la place de l'émulsion,de l'air pur et sec,de façon à éviter toute condensation pendant les périodes d'arrêt. Ces moyens comprennent un réchauffeur d'air 36,placé entre la pompe 32 et l'émulseur 30. Une sonde thermométrique 37 , placée sur la conduite 18,commande alors, en fonction de la température, et donc de la teneur en vapeur d'eéu de l'air,la répartition entre l'air recyclé et l'air capté à l'extérieur.

Une vanne 38 de réglage de la pression dans le circuit est placée sur la conduite 18,en amont du casseur d'émulsion 35. Elle permet de faire varier la pression,notamment dans la surface transparente 16, et par conséquent d'agir sur la forme des bulles de l'émulsion ;en effet,une augmentation de pression amène une diminution de la taille des bulles par dissolution du gaz dans le liquide.Une conduite de dérivation 39 relie la sortie de la vanne 38 à l'entrée de
la pompe 8;son utilité sera expliquée plus loin.

Une installation d'essai conforme à ce
schéma a fonctionné dans les conditions suivantes :
surface transparente de 2 $m^2$ constituée par un profilé
multitubulaire en polycarbonate comportant 200 canaux
de 5 x 5 mm, débit de la pompe 8: 8 $m^3$/h – pression
dans le circuit:20 m d'eau- volume de la cuve : 50 litres .

L'eau était additionnée d'un produit
tensioactif dans la proportion de 2,5 g pour 100 litres.

La vitesse de circulation du fluide dans
la tubulure d'aspiration de la pompe 8 a été trouvée
convenable entre 0,3 et 1 mètre par seconde.

A l'ouverture de l'introduction d'air
dans l'émulseur,la surface commençait immédiatement
à s'opacifier,sa blancheur augmentant progressivement à
mesure que la proportion d'air augmentait jusqu'à une
proportion approximative de 23% d'eau et 77% d'air en
volume.

L'arrêt de l'envoi d'air dans l'émulseur
entraînait le retour à la transparence initiale
au bout de 10 secondes environ. Il est à remarquer à
ce propos que la faible quantité d'agent tensio-actif
ajoutée à l'eau aboutissait à former une émulsion
qui se séparait spontanément après 200 secondes de repos.
Le faible temps de retour à la transparence s'explique
par la présence du casseur d'émulsion 35 et la capacité
de la cuve 1.

On a par ailleurs ob ervé que si l'on dévie le trajet du liquide par la conduite 39, c'est-à-dire en mettant hors circuit la cuve 1,l'émulseur 30 et le casseur d'émulsion 35,l'émulsion,une fois commencée, peut se maintenir indéfinivement sous l'effet des turbulences et des variations brusques de pression,moyennant une légère augmentation de la proportion d'agent tensio-actif,variable selon la dimension du circuit et la vitesse de circulation. La proportion d'agent tensio-actif est déterminée en prenant pour règle que le temps au bout duquel l'émulsion se sépare quand elle est au repos soit d'environ 1,5 à 5 fois le temps que met l'émulsion à parcourir le circuit.

On a observé aussi que,contrairement à ce qui est indiqué sur la figure 4,il est préférable,pour un bon maintien de l'émulsion,que celle-ci circule à travers l'espace transparent dans le sens descendant.

Lorsqu'on rétablit le circuit initial en fermant la conduite 39,l'émulsion disparait néanmoins très rapidement,environ 10 secondes dès lors qu'on ne met pas l'émulseur en action,grâce au temps de repos ménagé par la présence du bac 1.

Une augmentation de la pression dans le circuit à l'aide de la vanne 38 se traduit immédiatement par un éclaircissement de la paroi transparente, correspondant à la variation de la dimension des bulles de l'émulsion.

19

Il est donc possible de faire varier les propriétés d'absorption et de réflexion du fluide circulant, soit rapidement par modification de l'injection d'air, soit encore plus rapidement par changement de la pression.

On notera encore qu'il est très facilement possible de modifier une installation prévue pour fonctionner avec un agent opacifiant solide ou liquide afin de la faire fonctionner avec une émulsion de gaz. Il suffit d'ajouter sur le circuit, en parallèle ou en série, un émulsifieur entre la cuve 1 et la surface transparente 16, et un casseur d'émulsion sur la conduite de retour 18, une soupape de réglage de pression hydraulique pouvant/être ajoutée sur cette conduite de retour 18, de préférence en amont du casseur d'émulsion.

L'idée de base de la présente invention est d'agir sur la quantité ou la forme de l'agent opacifiant pour modifier les propriétés d'absorption ou de régulation des fluides.

Lorsque cet agent opacifiant est un gaz constituant une émulsion avec le liquide, les moyens d'agir sur les propriétés des fluides sont nombreux. On peut agir en effet:

-sur la quantité de gaz introduit dans le liquide, en contrôlant le débit ou la pression du gaz envoyé à l'émulseur,

-sur la taille des bulles, par le choix des caractéristiques de l'émulseur, s'il est statique, comme décrit plus haut, ou sur sa vitesse de rotation s'il s'agit d'un émulseur du type à hélice ou à turbine,

-sur la taille ou le nombre des bulles,en faisant varier la pression dans le circuit,

-sur la taille et la forme des bulles,en agissant sur la vitesse de circulation:on a constaté qu'une vitesse de circulation plus faible dans l'espace transparent améliore l'opacité de l'émulsion,peut-être parce que les bulles sont alors plus arrondies,

-sur le nombre des bulles et la "tenue" de l'émulsion,par augmentation de la teneur en agent tensio-actif;cela permet en outre des vitesses de circulation plus faibles,

-sur la tenue de l'émulsion,en agissant sur le sens de circulation:comme on l'a dit plus haut,une circulation de haut en bas dans l'espace transparent est favorable à l'opacification;en prévoyant un inverseur de sens de circulation,on peut accélérer les passages de l'opacité à la transparence et vice - versa;des essais ont montré l'efficacité de cette manoeuvre.

Toutes ces actions peuvent être facilement commandées automatiquement à l'aide de photo-détecteurs. Enfin,pour mémoire,il est clair que si l'espace transpa-rent est plus épais,les canaux ayant une plus grande dimension dans le sens du rayonnement,l'opacité pourra être plus grande.

Il est clair que l'emploi d'un agent opacifiant liquide ou solide procure des moyens d'action plus limités en nombre.

L'emploi d'un gaz procure d'autres avantages :

- il élimine tout risque de dépôt,obstruction ou encrassage,·indépendamment de la suppression, déjà mentionnée,de tout risque d' abrasion

- l'émulsion procure une diffusion de la lumière beaucoup plus parfaite celle qu'on obtient avec des particules solides par exemple,d'où une lumière plus isotrope en direction,

- l'émulsion constitue un milieu à très haut pouvoir d'isolation thermique et s'oppose donc aussi aux déperditions d'énergie sous forme de chaleur,ce qui n'est pas le cas des autres modalités.

En revanche,l'utilisation d'une émulsion gazeuse présente le léger inconvénient d'un risque de débordement de mousse,notamment par un évent de la cuve 1. Il suffit,pour y remédier,de prévoir un dispositif anti-mousse aux endroits convenables,tel que l'orifice de cet évent.

On peut utiliser notamment des membranes hydrophobes en feuille plastique perforée et traitée, qu'on trouve dans le commerce.

Les applications du procédé selon l'invention ne sont pas limitées à ce qui a été décrit plus haut; il peut être mis à profit également pour empêcher les condensations sur les surfaces transparentes,et même leur faire jouer un rôle de radiateur. On peut aussi l'utiliser pour colorer ou occulter certaines surfaces à des fins d'esthétique,de discrétion,ou de sécurité.

22

REVENDICATIONS

1. Procédé de régulation du flux de rayonnement, tel que lumière solaire, qui traverse une paroi transparente, procédé dans lequel on fait circuler ce fluide formé d'un liquide transparent chargé d'un agent opacifiant dans un circuit comportant un passage entre des surfaces transparentes, placéespour constituer ladite paroi transparente, caractérisé en ce qu'on agit sur la quantité ou la forme de l'agent opacifiant introduit dans le liquide pour régler le pouvoir absorbant ou réfléchissant du fluide envoyé entre lesdites surfaces transparentes, et par conséquent la quantité d'énergie absorbée ou réfléchie.

2. Procédé selon la revendication 1, caractérisé en ce qu'on sépare le liquide transparent et l'agent opacifiant après qu'ils sont passés entre lesdites surfaces , et en ce qu'on recycle l'un et/ou l'autre de ces produits, dans des proportions correspondant au pouvoir absorbant ou réfléchissant désiré pour le fluide.

3. Procédé selon la revendication 1 ou 2, et dans lequel le fluide contient des bulles de gaz, caractérisé en ce qu'on forme une émulsion dudit gaz dans le liquide, et on change les proportions relatives de gaz et de liquide, et/ou la taille des bulles de l'émulsion afin de faire varier le pouvoir absorbant et/ou réfléchissant du fluide.

4. Procédé selon la revendication 3, caractérisé en ce qu'on injecte du gaz dans le liquide afin de former l'émulsion avant que le fluide passe entre lesdites surfaces transparentes et en ce qu'on brise l'émulsion après qu'il /est passé entre lesdites surfaces, afin de récupérer le liquide.

5. Procédé selon l'une des revendications 3 ou 4, caractérisé en ce qu'on fait varier la pression sous laquelle le fluide circule entre les surfaces transparentes afin de modifier les propriétés d'absorption et/ou de réflexion dudit fluide.

6. Procédé selon l'une des revendications 3 à 5, caractérisé en ce qu'on fait varier la taille des bulles de l'émulsion à l'aide d'un émulseur à caractéristiques variables.

7. Procédé selon l'une des revendications 3 à 5, caractérisé en ce qu'on fait varier les propriétés de l'émulsion en agissant sur la vitesse et/ou le sens de circulation du liquide.

8. Procédé selon l'une des revendications 1 ou 2, dans lequel le liquide transparent est de l'eau, caractérisé en ce que le produit opacifiant est un liquide non miscible à l'eau et à pouvoir absorbant élevé tel qu'une huile minérale, une huile végétale ou du kérosène teinté.

9. Procédé selon l'une des revendications 1 ou 2, caractérisé en ce que le produit opacifiant est constitué par de fines particules solides, telles que des microbilles de polypropylène, de 1 à 400 microns.

10. Procédé selon l'une des revendications 1 à 7, caractérisé en ce que le liquide transparent est lui-même chargé d'un produit coloré ou non pour augmenter au maximum son coefficient d'absorption.

11. Procédé selon l'une des revendications 1 à 8, caractérisé en ce qu'on récupère l'énergie absorbée par ledit fluide lors de son passage entre lesdites lames transparentes.

12. Dispositif pour la mise en oeuvre du procédé selon l'une des revendications 1 à 7, caractérisé en ce qu'il comprend un circuit fermé comportant un réservoir de liquide fermé (1) , une pompe de circulation (8) un ensemble de tubes transparents (16) une conduite de retour (18), un émulseur (30) étant placé entre le réservoir et les tubes 16 et disposé pour injecter de l'air comprimé dans le liquide et former une émulsion, et un casseur d'émulsion (35) étant placé sur la conduite de retour (18).

13. Dispositif selon la revendication 12, caractérisé en ce qu'un moyen de réglage de la pression (38) dans le circuit est placé sur la conduite de retour (18) en amont du casseur d'émulsion (35).

14. Dispositif selon la revendication 12, caractérisé en ce que l'émulseur 30 est constitué par un tube-, à l'intérieur duquel est placé un bicône axial audit tube et formant venturi, dans l'axe duquel débouche un conduit d'amenée de l'air comprimé.

15.Dispositif pour la mise en oeuvre du procédé selon l'une quelconque des revendications 8 à 10, caractérisé en ce qu'il comprend, en combinaison, un premier réservoir de fluide transparent 1, un deuxième réservoir avec produit opacifiant 2, divisés par un séparateur 3, lesdits réservoirs 1 et 2 étant munis de sorties de produit 4 et 5 débouchant respectivement dans une conduite 6 acheminant le fluide à une pompe 8 et dans une conduite 7 reliée à un dispositif de dosage 9 de produit opacifiant réagissant en réaction à une cellule photorésistante 10 reliée audit dispositif de dosage, le mélange convenable étant ensuite envoyé par l'intermédiaire d'une conduite 14 et d'un ensemble 15 vers un capteur 16 formé de tubes transparents pour traverser ensuite un dispositif récupérateur de chaleur 17 et être finalement ramené à l'aide d'une conduite 18 dans un séparateur 19 dont les conduites 20 et 21 restituent les produits respectifs dans leurs réservoirs 1 et 2.

16. Application du procédé selon l'une quelconque des revendications 1 à 11 à la climatisation d'une serre pour faire varier, d'une manière cyclique, les alternances obscurité-éclairement nécessaires à la modification des périodes de floraison.

17. Application du procédé selon l'une quelconque des revendications 1 à 11 à la protection contre les rayonnements du soleil, de fours, de flammes ou d'arcs électriques.

18.Application du procédé selon l'une quelqonque des revendications 1 à 11 à la limitation des déperditions d'énergie lumineuse ou thermique dans les bâtiments par utilisation d'un agent opacifiant qui augmente le pouvoir réfléchissant du fluide.

FIG.1

0014663

0014663

FIG.2

FIG.3

FIG.4

0014663

Office européen
des brevets

**RAPPORT DE RECHERCHE EUROPEENNE**

Numéro de la demande
EP 80 40 0195

## DOCUMENTS CONSIDERES COMME PERTINENTS

| Catégorie | Citation du document avec indication, en cas de besoin, des parties pertinentes | Revendication concernée |
|---|---|---|
| XD | <u>US - A - 3 107 052</u> (GARRISON)<br><br>* Colonne 1, ligne 55 - colonne 3, ligne 71; figures 1,2,3 *<br><br>-- | 1,2,10,<br>11,15<br>17,18 |
| D | <u>FR - A - 2 344 217</u> (TRIMBOLI LONGETTO)<br><br>* Page 5, lignes 16-30; revendication 1 *<br><br>-- | 1,11,<br>17 |
| D | <u>DE - A - 2 608 302</u> (SCHWARZ)<br><br>* Revendications 1,5 *<br><br>-- | 8 |
| XP | <u>EP - A - 0 003 944</u> (A.N.V.A.R.)<br><br>* Revendications 1,3,4,6,7,10 *<br><br>-- | 1,2,8<br>9,11,<br>15,17 |
| | <u>BE - A - 550 914</u> (RALET)<br><br>* Revendications 1,9 *<br><br>---- | 1,3 |

**CLASSEMENT DE LA DEMANDE (Int. Cl. 3)**

A 01 G 9/24
F 24 J 3/02
G 05 D 23/01

**DOMAINES TECHNIQUES RECHERCHES (Int. Cl. 3)**

A 01 G 9/24
F 24 J 3/02
G 05 D 23/01

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-05-1980 | HERYGERS |

OEB Form 1503.1 06.78